Europäisches Patentamt

European Patent Office

Office européen des brevets

(19)

(11) Veröffentlichungsnummer : **0 025 419**
**B1**

(12) **EUROPÄISCHE PATENTSCHRIFT**

(45) Veröffentlichungstag der Patentschrift :
13.06.84

(21) Anmeldenummer : **80810286.7**

(22) Anmeldetag : **11.09.80**

(51) Int. Cl.³ : **A 61 C 13/26**

(54) **Vorrichtung zur Befestigung von Zahnprothesen.**

(30) Priorität : **11.09.79 CH 8224/79**

(43) Veröffentlichungstag der Anmeldung :
**18.03.81 Patentblatt 81/11**

(45) Bekanntmachung des Hinweises auf die Patenterteilung : **13.06.84 Patentblatt 84/24**

(84) Benannte Vertragsstaaten :
**DE GB NL SE**

(56) Entgegenhaltungen :
**CH-A-   352 782**
**US-A- 2 002 048**
**US-A- 3 091 032**
**US-A- 3 641 670**

(73) Patentinhaber : **Elgarden N.V.**
**Willemstad (Curaçao - Niederländische Antillen) (NL)**

(72) Erfinder : **Der Erfinder hat auf seine Nennung verzichtet**

(74) Vertreter : **Bovard, Fritz Albert et al**
**Bovard AG Patentanwälte VSP Optingenstrasse 16**
**CH-3000 Bern 25 (CH)**

**Beschreibung**

Die vorliegende Erfindung bezieht sich auf eine Vorrichtung gemäss dem Oberbegriff des Anspruches 1.

Bei der bisher angewandten bekannten Technik werden Zahnlücken mit Hilfe von Brücken ausgefüllt. Dabei dienen die die Lücke begrenzenden Zähne als Stützpfeiler für die Brückenprothese. Diese meist gesunden Zähne müssen abgeschliffen werden, damit die Kronen der Brücke auf diese aufgesetzt werden können. Ein abgeschliffener Zahn nun ist anfälliger gegen Erkrankung als ein nicht abgeschliffener. Das Abschleifen der als Stützen für die Brücke dienenden Zähne sowie die Einpassung und die Anfertigung der Brücke sind zeitaufwendige und teure Arbeiten.

Aus der Schweizerpatentschrift 352 782 ist ein Verankerungselement für einen künstlichen Zahn bekannt, wobei der künstliche Zahn mit einem Stift z. B. in die Krone eines natürlichen Zahnes eingesetzt wird. Dieses Verankerungselement eignet sich nur zum Ausfüllen einer einzigen Lücke zwischen zwei bestehenden Zähnen, wobei der einzige Verankerungsstift sehr massiv ausgebildet sein muss und demzufolge für die Bohrung zur Aufnahme des Stiftes viel Material des natürlichen Zahnes entfernt werden muss. Bei der Halterung mit nur einem Stift könnte es vorkommen, dass sich der künstliche Zahn gegenüber dem bestehenden Zahn verdreht.

Aus der US-Patentschrift 3 641 670 ist ein Verfahren sowie eine Vorrichtung zur Herstellung von Zahnprothesen beschrieben. Dabei wird ein Stab in zwei eine Zahnlücke begrenzende Zähne mittels Füllmaterial eingelassen. Mit Hilfe einer Form werden um den Stab ein oder mehrere Zähne mit Hilfe einer in die Form gefüllten Masse aufgebaut. Der Stab dient sowohl zur Verankerung der Prothese in den die Lücke begrenzenden Zähnen als auch als Träger derselben. Die Vorrichtung weist den Nachteil auf, dass in den bestehenden Zähnen eine grosse Aussparung ausgebohrt werden muss, da der Stab von oben eingesetzt wird. Im weiteren muss der Stab in seiner Länge der jeweiligen Lücke angepasst werden. Im weiteren besteht die nachteilige Möglichkeit, dass sich der Stab in seinen Halterungen in den bestehenden Zähnen drehen könnte.

Es ist eine Aufgabe der vorliegenden Erfindung, das feste Einsetzen von Prothesen in Zahnlücken zu ermöglichen, ohne dass dabei gesunde Zähne abgeschliffen werden müssen. Für die notwendigen Bohrungen zur Verankerung der Prothese soll an den bestehenden Zähnen nur ein minimaler Materialabtrag notwendig sein. Im weiteren sollen der Zeitaufwand sowie die Kosten für die Anfertigung und den Einbau der Prothesen gesenkt werden. Der Aufbau der Prothesen soll unabhängig von Gebiss und Anzahl der Lücken aus lagermässigen Elementen erfolgen können. Die Prothese soll sich gegenüber den bestehenden Zähnen nicht verdrehen können.

Dies wird erfindungsgemäss durch die kennzeichnenden Werkmale des Anspruches 1 erzielt.

Im folgenden werden Ausführungsbeispiele der Erfindung anhand der beiliegenden Zeichnung näher beschrieben. Es zeigen

Figur 1 das Verbindungselement der Haltevorrichtung mit den Verankerungselementen und zwei verschiedenen Stützelementen.

Figur 2 eine Vorderansicht, teilweise geschnitten, einer an einem Zahn befestigten Haltevorrichtung für eine Prothese.

Figur 3 eine in einer Zahnlücke eingesetzte Haltevorrichtung für einen künstlichen Zahn.

Figur 4 eine in einer Zahnlücke eingesetzte Haltevorrichtung für drei Ersatzzähne.

Figur 5 zwei in einer Zahnlücke eingesetzte Haltevorrichtungen mit einem in den Kieferknochen eingelassenen Keramikzwischenpfeiler.

Figur 6 einen Querschnitt durch eine montierte Haltevorrichtung mit schrägen Einsatzstiften.

Figur 7 einen Querschnitt durch eine fertige Prothese.

Figur 8 eine Bohrlehre.

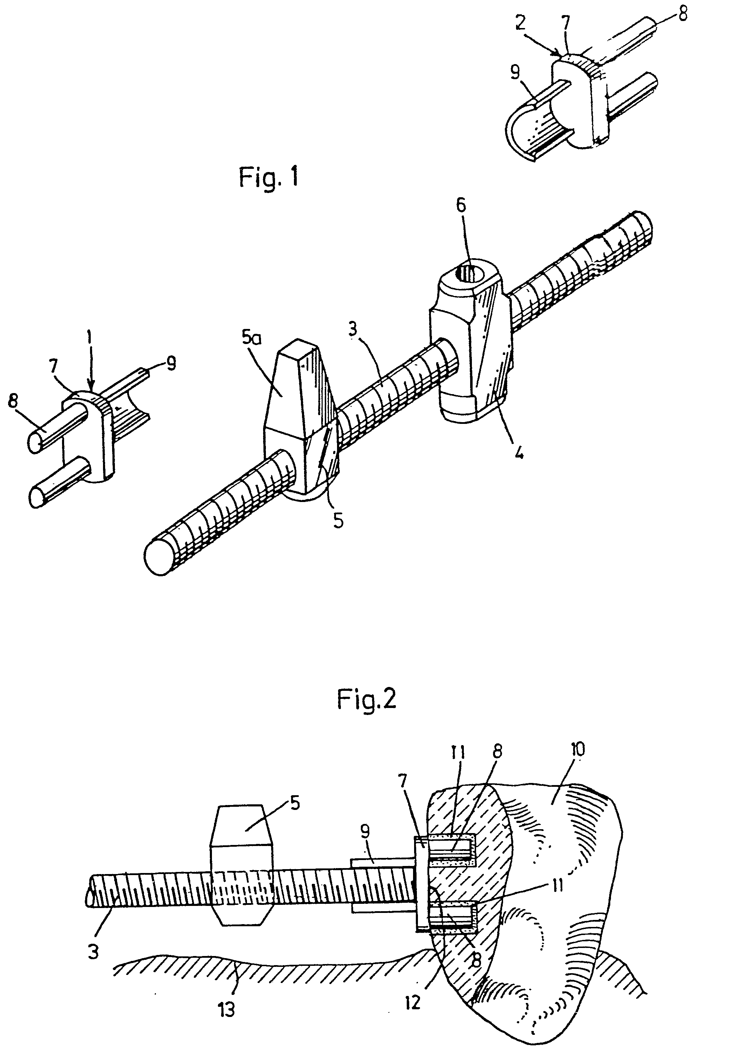

In Fig. 1 ist die Haltevorrichtung für die Zahnprothesen dargestellt. Die Vorrichtung umfasst zwei Verankerungselemente 1, 2, ein als Gewindestange ausgebildetes Verbindungselement 3, sowie ein oder mehrere mit einem Innengewinde versehene, zur Befestigung der künstlichen Zähne bestimmten, Stützelemente 4, 5. Das in der Fig. 1 links dargestellte Stützelement 5 ist bezüglich der Gewindestange 3 nicht symmetrisch und weist im oberen Teil einen kegelstumpfförmigen Fortsatz 5a auf. Das in der Fig. 1 rechts dargestellte Stützelement 4 ist bezüglich der Gewindestange 3 symmetrisch ausgebildet und weist auf seinen beiden Enden Vertiefungen 6 auf. Die Verankerungselemente 1, 2 bestehen aus einer Halteplatte 7, die auf einer Seite mit zwei Stiften 8 und auf der andern Seite mit einer halbzylinderförmigen Schale 9 versehen ist.

Die Elemente können aus den in der Chirurgie für Implantate üblichen Metallen, wie z. B. hochlegierte rostfreie Stähle, Kobalt-Chrom-Nickel-Legierungen oder aus Titan gefertigt werden. Wichtig ist eine hohe Korosionsbeständigkeit und eine hohe mechanische Belastbarkeit.

In Fig. 2 ist eine Vorderansicht, teilweise im Schnitt, einer zwischen zwei gesunden Zähnen 10 montierten Haltevorrichtung für einen künstlichen Zahn dargestellt. Aus der Fig. 2 ist nur einer der beiden als Stützen dienenden gesunden Zähne 10 ersichtlich. Die Verankerung erfolgt bei beiden die Lücke begrenzenden Zähnen auf dieselbe Art und Weise. In den Zahn 10 werden seitlich zwei Löcher 11 gebohrt, die zur Aufnahme der Stifte 8 des Verankerungselementes 1 dienen. Mit einer Röntgenaufnahme kann die maximal zulässige Bohrtiefe festgestellt werden, damit die Pulpa nicht verletzt wird. Das Verankerungselement 1 wird in den gesunden Zahn 10 einzementiert, wobei neben den Stiften 8 auch die dem Zahr anliegende Fläche 12 der Halteplatte 7 mit dem Zahn 10 durch Zementierung oder Kleben verbunden werden kann.

Das Stützelement 5 wird durch Drehen an der Gewindestange 3 in die gewünschte Lage gebracht und alsdann mit dieser z. B. durch Verschweissung starr verbunden. Die Gewindestange wird in die schalenförmgigen Ansatzstücke 9 der Verankerungselemente eingelegt und mit diesen verklebt, zementiert oder verschweisst. Mit der Linie 13 ist der Verlauf des Zahnfleisches dargestellt.

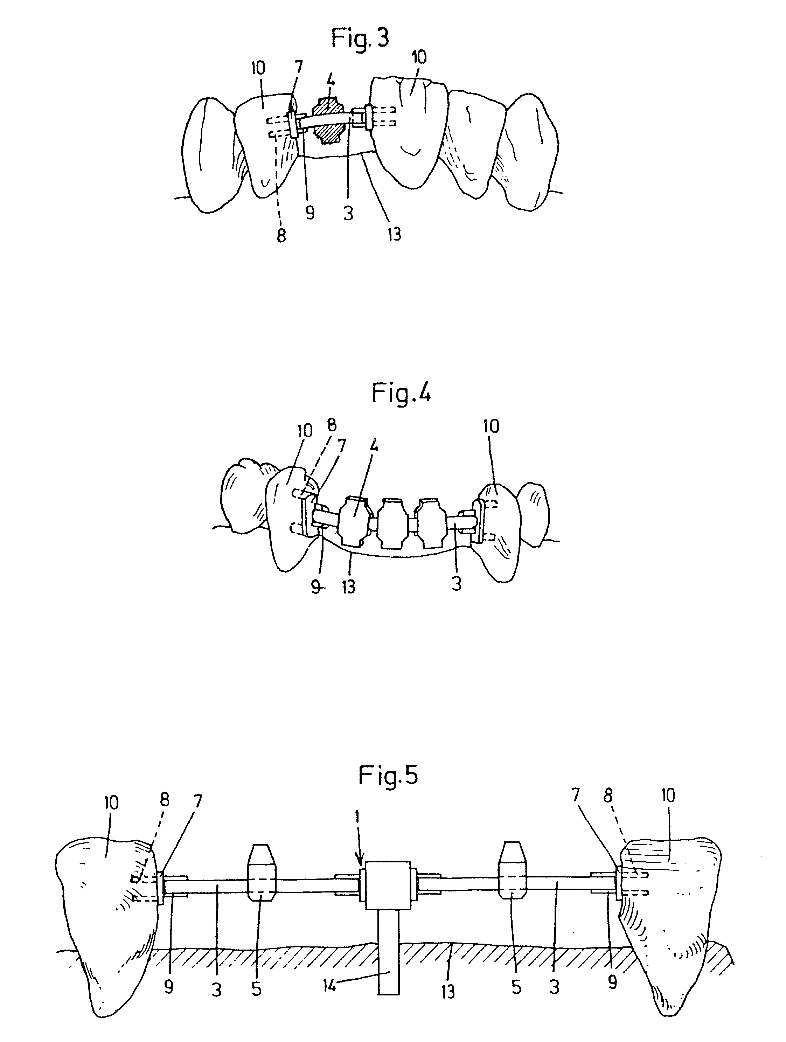

In den Fig. 3 und 4 ist die Vorrichtung zur Befestigung eines, respektiv von drei künstlichen Zähnen dargestellt. Die aus diesen Figuren nicht ersichtlichen künstlichen Zähne werden an den Stützvorrichtungen zementiert.

Falls die Lücke zwischen den gesunden Zähnen, wie aus Fig. 5 ersichtlich, sehr gross ist, so ist aus Stabilitätsgründen eine Zwischenstütze 14 erforderlich. Diese Zwischenstütze 14 kann ein nach bekannter Technik in den Kieferknochen eingelassenes Keramikimplantat sein. Die Verankerungselemente 1 werden anstatt an einem gesunden Zahn an diesem Keramikimplantat befestigt. Das Keramikimplantat 14 dient gleichzeitig auch als Stütze für einen künstlichen Zahn. Unter Umständen könnte auch ein in eine Wurzel eingesetzter Stiftzahn als Zwischenstütze gebraucht werden.

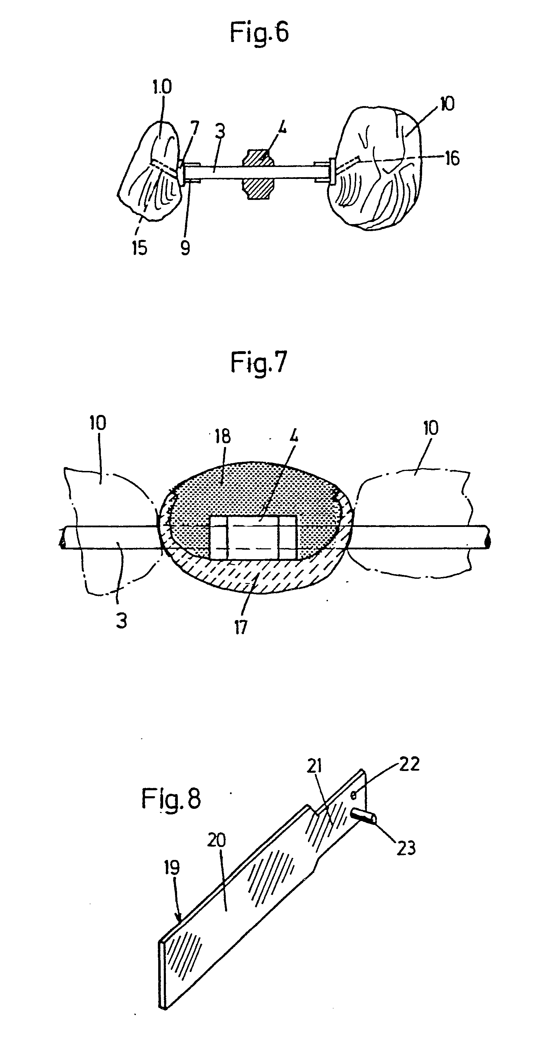

Wenn die Lücke nur einen fehlenden Zahn umfasst, ist es schwierig, mit dem Bohrer seitlich ein Bohrung vorzunehmen. Aus diesem Grunde werden gemäss Fig. 6 Verankerungselemente mit je zwei, schräg angeordneten Stiften 15 verwendet. Die zwei Bohrungen 16 pro Zahn können dabei in einer solchen Richtung ausgeführt werden, dass der jeweils benachbarte Zahn dem Bohrer nicht im Wege steht.

In Fig. 7 ist im Querschnitt ein an der Haltevorrichtung befestigter künstlicher Zahn 17 dargestellt. Die halbschalförmige Prothese 17 wird an der Vorderseite auf das Stützelement 4 gelegt und an dieses sowie an das Verbindungselement 3 zementiert. Mit dem Zement 18 wird auch der hintere nicht sichtbare Teil des Zahnes geformt.

Aus Fig. 8 ist eine Bohrlehre 19 zur Ausführung der Bohrungen an den gesunden, die Lücke begrenzenden Zähnen 10 ersichtlich. Die Lehre besteh aus einem Handgriff 20, einem Ansatzstück 21 mit einer Oeffnung 22 und einem Stift 23. Wenn ein Loch in den Zahn gebohrt ist, so wird der Stift 23 in dasselbe eingeführt und durch die Oeffnung 22 das zweite Loch im Zahn gebohrt. Diese Lehre gestattet, dass stets derselbe Lochabstand eingehalten wird, um möglichst dieselben Verankerungselemente 1, 2 verwenden zu können.

Wie oben beschrieben, werden die Verbindungselemente 3 mit den als Halbschalen ausgebildeten Ansatzstücken 9 der Verankerungselemente 1, 2 vorteilhafterweise verklebt, zementiert oder verschweisst. Die Oeffnung der Halbschalen ist im Falle der Verschweissung vorteilhafterweise nach vorne gerichtet. Es wäre aber auch möglich, ein Ansatzstück 9 zylindrisch auszubilden und mit einem Gewinde zu versehen, so dass das als Gewindestange ausgebildete Verbindungselement 3 bei einem Ansatzstück 9 eingeschraubt und beim anderen z. B. einzementiert werden könnte.

Falls einer oder beide die Lücke begrenzenden, als Stützen für die Prothese dienenden Zähne nicht mehr gesund sind, so werden diese vorteilhafterweise mit einer Krone versehen, wobei die Stifte 8 der Verankerungselemente 1, 2 in die Krone und eventuell noch in den Zahn eingreifen.

Bei einer sich über mehrere Lücken erstreckenden Prothese können die einzelnen künstlichen Zähne noch zusätzlich von oben durch U-förmige Metallstücke verblockt werden.

Mit dem beschriebenen Aufbau können Zahnprothesen schnell und billig angefertigt werden. Im weiteren werden gesunde Zähne geschont, indem nur eine oder zwei kleine Bohrungen mit einem Durchmesser von ca. 1 mm notwendig sind und nicht der gesamte Zahn abgeschliffen werden muss. Die einzelnen Elemente des Prothesenaufbaus können in der Zahnarztpraxis an Lager gehalten werden.

## Ansprüche

1. Vorrichtung zur Befestigung von Zahnprothesen mit Verankerungselementen (1, 2), die einen zum Eingreifen in bestehende Zähne oder Zwischenstützen bestimmten Stift (8) umfassen, mit mindestens einem an den Verankerungselementen befestigbaren, als Träger der Prothesen dienenden Verbindungselement (3) und mit einem Ansatzstück (5) zur Befestigung des Verbindungselementes (3), dadurch gekennzeichnet, dass beidseits des Verbindungselementes (3) Verankerungselemente (1, 2) mit je einem Ansatzstück (9), mit je einer Halteplatte (7) und je mindestens zwei zum Eingreifen in bestehende Zähne oder Zwischenstützen bestimmte Stifte (8) vorgesehen sind, und dass jeweils auf der einen Seite der Halteplatten (7) die zwei Stifte (8) und auf der andern Seite das Ansatzstück (9) angebracht sind.

2. Vorrichtung nach Anspruch 1, dadurch gekennzeichnet, dass das Verbindungselement (3) mit mindestens einem Stützelement (4, 5) zur Befestigung einer Zahnprothese versehen ist.

3. Vorrichtung nach Anspruch 1 oder 2, dadurch gekennzeichnet, dass das Verbindungselement (3) ein Aussengewinde aufweist.

4. Vorrichtung nach Anspruch 2, dadurch gekennzeichnet, dass das Stützelement (4, 5) ein Innengewinde aufweist.

5. Vorrichtung nach Anspruch 2, 3 oder 4, dadurch gekennzeichnet, dass das Verbindungselement (3) mit dem Stützelement (4, 5) verschweisst ist.

6. Vorrichtung nach einem der vorangehenden Ansprüche, dadurch gekennzeichnet, dass die Verankerungs-, Verbindungs- und Stützelemente (1, 2, 3, 4, 5) aus Titan bestehen.

## Claims

1. Device for fastening dental prostheses comprising anchoring elements (1, 2) which include a pin (8) intended to engage in natural teeth or intermediate supports having at least one connection element (3) serving to bear the prostheses and securable on the anchoring element and with an extension piece (5) for fastening the connection element (3) characterized in that on each side of the connection element (3) anchoring elements (1, 2) are provided each having an extension piece (9) with a retaining plate (7) and at least two pins (8) intended to engage in natural teeth or intermediate supports and that on the one side of the retaining plate (7) two pins (8) and on the other side the extension piece (9) are disposed respectively.

2. Device according to claim 1, characterized in that the connection element (3) is provided with at least one supporting element (4, 5) for fastening a dental prostheses.

3. Device according to claim 1 or 2, characterized in that the connection element (3) has an external thread.

4. Device according to claim 2, characterized in that the supporting element (4,5) has an internal thread.

5. Device according to claim 2, 3 or 4, characterized in that the connection element (3) is welded together with the supporting element (4, 5).

6. Device according to one of the previous claims, characterized in that the anchoring elements, connection element and supporting elements (1, 2, 3, 4, 5) are of titanium.

## Revendications

1. Dispositif pour la fixation de prothèses dentaires, comprenant des éléments d'ancrage (1, 2) avec une tige (8) destinée à étre engagée dans une dent existante ou dans un appui intermédiaire, au moins un organe de liaison (3) susceptible d'être fixé aux éléments d'ancrage et servant de support à la prothèse, et une pièce rapportée (5) pour la fixation de l'organe de liaison (3), caractérisé en ce que des éléments d'ancrage (1, 2) comprenant chacun une pièce rapportée (9), une plaque de retenue (7) et au moins deux tiges (8) s'engageant dans des dents existantes ou des appuis intermédiaires, sont prévus et en ce que dans chaque élément d'ancrage les tiges sont situées d'un même côté de la plaque (7) et la pièce rapportée (9) de l'autre côté.

2. Dispositif selon la revendication 1, caractérisé en ce que l'organe de liaison (3) est pourvu d'au moins un organe d'appui (4, 5) pour la fixation d'une prothèse.

3. Dispositif selon l'une des revendications 1 ou 2, caractérisé en ce que l'organe de liaison (3) présente un filetage externe.

4. Dispositif selon la revendication 2, caractérisé en ce que l'organe d'appui (4, 5) présente un filetage intérieur.

5. Dispositif selon l'une des revendications 2, 3 ou 4, caractérisé en ce que l'organe de liaison (3) est soudé à l'organe d'appui (4, 5).

6. Dispositif selon l'une quelconque des revendications précédentes, caractérisé en ce que les organes d'ancrage, de liaison et d'appui (1, 2, 3, 4, 5) sont en titane.

0 025 419

Fig. 1

Fig.2

Fig. 3

Fig.4

Fig.5

2

## Fig. 6

## Fig. 7

## Fig. 8